# EUROPÄISCHE PATENTSCHRIFT

(11) **EP 2 933 516 B1**
(45) Veröffentlichungstag und Bekanntmachung des Hinweises auf die Patenterteilung: **04.09.2019**
(21) Anmeldenummer: 15158927.2
(22) Anmeldetag: 13.03.2015
(51) Int. Cl.: F16D 23/14, F16D 25/08

(54) **Betätigungssystem**
Actuating system
Système d'actionnement

(30) Priorität: 11.04.2014 DE 102014207008
(43) Veröffentlichungstag der Anmeldung: 21.10.2015
(73) Patentinhaber: Schaeffler Technologies AG & Co. KG, 91074 Herzogenaurach (DE)
(72) Erfinder: Ortmann, Simon, 77866 Rheinau-Linx (DE); Fischer, Rebekka, 77889 Seebach (DE); Maisch, Timo, 76571 Gaggenau (DE)

(56) Entgegenhaltungen:
- DE-A1- 3 044 048
- DE-A1-102011 017 380
- DE-T2-602004 009 042

## Beschreibung

Die Erfindung betrifft ein Betätigungssystem, mit dessen Hilfe ein Kupplungsaggregat zum Kuppeln einer Antriebswelle eines Kraftfahrzeugmotors mit mindestens einer Getriebeeingangswelle eines Kraftfahrzeuggetriebes betätigt werden kann.

Die DE 60 2004 009 042 T2 offenbart ein Betätigungssystem zum Betätigen eines Kupplungsaggregats zum Kuppeln einer Antriebswelle eines Kraftfahrzeugmotors mit mindestens einer Getriebeeingangswelle eines Kraftfahrzeuggetriebes.

Ein hydraulisches Betätigungssystem zum Betätigen eines Kupplungsaggregats kann einen Zylinder aufweisen, in dem ein Kolben geführt ist. Bei einem Anstieg des Drucks in dem Zylinder kann der Kolben aus dem Zylinder ausgefahren werden, um ein Betätigungselement, beispielsweise eine in der Art einer Tellerfeder ausgebildete Hebelfeder, zu bewegen, das dadurch eine Anpressplatte relativ zu einer Gegenplatte verlagern kann. Dadurch kann zwischen der Gegenp'atte und der Anpressplatte eine Kupplungsscheibe reibschlüssig verpresst werden, wodurch das Kupplungsaggregat ein Drehmoment einer Antriebswelle eines Kraftfahrzeugmotors an eine Getriebeeingangswelle eines Kraftfahrzeuggetriebes übertragen kann. Um das Betätigungselement zu bewegen, muss die beim Betätigen des Kupplungsaggregats auftretende Betätigungskraft in axialer Richtung abgestützt werden. Hierzu kann das Betätigungssystem mit einem Getriebegehäuse des Kraftfahrzeuggetriebes verschraubt werden, wodurch jedoch die Montage des Kupplungsaggregats erschwert wird.

Es besteht ein ständiges Bedürfnis ein Kupplungsaggregat kostengünstig und leicht montierbar auszubilden.

Es ist die Aufgabe der Erfindung Maßnahmen aufzuzeigen, die ein leicht montierbares und kostengünstiges Kupplungsaggregat ermöglichen.

Die Lösung der Aufgabe erfolgt erfindungsgemäß durch ein Betätigungssystem mit den Merkmalen des Anspruchs 1. Bevorzugte Ausgestaltungen der Erfindung sind in den Unteransprüchen angegeben, die jeweils einzeln oder in Kombination einen Aspekt der Erfindung darstellen können.

Erfindungsgemäß ist ein Betätigungssystem zum Betätigen eines Kupplungsaggregats zum Kuppeln einer Antriebswelle eines Kraftfahrzeugmotors mit mindestens einer Getriebeeingangswelle eines Kraftfahrzeuggetriebes vorgesehen mit einem Nehmerzylinder zum Einleiten einer Betätigungskraft, einer Führungshülse zum Abstützen des Nehmerzylinders und einem an einem Kupplungsteil, insbesondere Kupplungsdeckel, abgestützten Deckellager zur Lagerung des Kupplungsteils an der Führungshülse, wobei das Deckellager auf der Führungshülse aufgesteckt ist, wobei die Führungshülse an einem von dem Nehmerzylinder wegweisendem Endbereich ein Außengewinde aufweist und eine Haltemutter auf dem Außengewinde aufgeschraubt ist, und wobei das Deckellager zwischen der Haltemutter und dem Kupplungsteil in axialer Richtung verliersicher, insbesondere spielfrei, aufgenommen ist.

Mit Hilfe des zwischen der Haltemutter und dem Kupplungsteil vorgesehenen Deckellagers ist es möglich den Nehmerzylinder an dem Kupplungsteil abzustützen, so dass es nicht erforderlich ist das Betätigungssystem an einem Getriebegehäuse eines Kraftfahrzeuggetriebes abzustützen. Die Montage eines Kupplungsaggregats mit einem derartigen Betätigungssystem ist dadurch vereinfacht. Der Kraftfluss zum Abstützen des Nehmerzylinders kann hierbei von dem Nehmerzylinder über die Führungshülse, die mit der Führungshülse verschraubte Haltemutter und dem an der Haltemutter abgestützten Deckellager verlaufen. Das Deckellager kann direkt oder indirekt, beispielsweise über einen mit dem Deckellager und dem Kupplungsteil verklemmten Haltering, an dem Kupplungsteil abgestützt sein. In dem Nehmerzylinder kann insbesondere ein Kolben geführt sein, der bei einem in dem Nehmerzylinder ansteigenden Druck ausgefahren werden kann, um ein Betätigungselement, beispielsweise eine in der Art einer Tellerfeder ausgebildete Hebelfeder, zu bewegen, das dadurch eine Anpressplatte relativ zu einer Gegenplatte einer Reibungskupplung verlagern kann. Insbesondere kann sich das Betätigungselement direkt oder indirekt an dem Kupplungsteil abstützen, so dass sich ein vergleichsweise kleiner geschlossener Kraftfluss ergibt. Die Haltemutter kann nicht nur zur axialen Positionierung des Deckellagers, sondern auch zur Abtragung der beim Betätigen des Kupplungsaggregats auftretenden Kräfte verwendet werden. Hierbei wird die Erkenntnis ausgenutzt, dass eine Schraubverbindung bei der Montage leicht hergestellt werden kann und bei in axialer Richtung wirkenden Kräften eine dauerfeste Abstützung der Betätigungskräfte ermöglicht. Durch die mit der Führungshülse verschraubte Haltemutter können beim Betätigen des Kupplungsaggregats auftretende Betätigungskräfte über das Deckellager an das Kupplungsteil abgetragen werden, ohne den Nehmerzylinder mit einem Getriebegehäuse eines Kraftfahrzeuggetriebes verbinden zu müssen, so dass ein dauerfestes leicht montierbares und kostengünstiges Kupplungsaggregat ermöglicht ist.

Der Nehmerzylinder kann insbesondere hydraulisch mit einem Geberzylinder verbunden sein, der in dem Fall, dass eine Betätigungswunsch des Kupplungsaggregats, beispielsweise für einen Wechsel eines Getriebegangs, detektiert wird, in dem Nehmerzylinder eine Druckerhöhung herbeiführt. Der Nehmerzylinder kann insbesondere einen ringförmigen Druckraum aufweisen, in dem ein Kolben in axialer Richtung verschiebbar geführt sein kann. Der Kolben kann über ein Betätigungslager an einem mitrotierenden Betätigungselement angreifen. Der Nehmerzylinder sowie die Führungshülse und die Haltemutter weisen insbesondere eine zu einer Drehachse des Kupplungsaggregats im Wesentlichen koaxiale Durchgangsöffnung auf, durch die mindestens eine Getriebeeingangswelle des Kraftfahrzeuggetriebes hindurchgeführt sein kann. Vorzugsweise weist die Haltemutter einen nach radial innen abstehenden Ansatz auf, der an einer axialen Stirnseite der Führungshülse anschlagen kann, um einen maximal möglichen Aufschraubweg der Haltemutter zu begrenzen und/oder eine definierte Relativlage der Haltemutter zur Führungshülse vorzugeben. Mit der Getriebeeingangswelle kann eine Kupplungsscheibe einer Reibungskupplung des Kupplungsaggregats drehfest verbunden sein. Das Außengewinde der Führungshülse ist insbesondere nur in einem Teil der axialen Erstreckung der Führungshülse vorgesehen. Insbesondere ist das Außengewinde in axialer Richtung zu einem Bereich beabstandet, in dem ein Innenring des Deckellagers über eine Spielpassung, eine Übergangspassung oder eine Presspassung mit der Führungshülse verbunden ist. Ein direkter Kontakt des Innenrings des Deckellagers mit dem Außengewinde ist dadurch vermieden. Vorzugsweise weist die Haltemutter einen in axialer Richtung auf das Deckellager zu abstehenden, vorzugsweise ringförmigen, Halteanschlag auf, über den die Betätigungskräfte des Nehmerzylinders an das Deckellager abgestützt werden können. Insbesondere sind das Deckellager und/oder das Kupplungsteil in axialer Richtung zwischen der Haltemutter und dem Nehmerzylinder positioniert. Das an dem Deckellager gelagerte Kupplungsteil kann insbesondere ein eine Reibungskupplung des Kupplungsaggregats zumindest teilweise abdeckender Kupplungsdeckel sein, an dem insbesondere das Betätigungselement direkt oder indirekt schwenkbar abgestützt sein kann. Alternativ kann das Kupplungsteil auch eine an dem Deckellager gelagerte Gegenplatte der Reibungskupplung sein. Insbesondere ist in axialer Richtung zwischen dem Kupplungsteil und dem Nehmerzylinder das Betätigungselement vorgesehen, wobei vorzugsweise das Betätigungselement im unbetätigten Zustand in axialer Richtung mit einer Federkraft vorgespannt ist. Ferner kann das Betätigungslager mit einer an dem Nehmerzylinder abgestützten Vorlastfeder gegen das Betätigungselement gedrückt werden. Ein unnötiges axiales Spiel, das beispielsweise zu Klappergeräuschen führen könnte, kann dadurch vermieden werden.

Insbesondere sind eine Flankengeometrie des Außengewindes und/oder eine Flankengeometrie der Haltemutter für eine selbstverstärkende Verschraubung ausgeformt. Durch die selbstverstärkende Verschraubung können entsprechend hohe Kräfte abgestützt werden ohne dass sich die Haltemutter lockert und/oder von der Führungshülse löst. Beispielsweise kann die Flankensteigung des Außengewindes der Führungshülse von der Flankensteigung des Innengewindes der Haltemutter geringfügig abweichen, so dass sich die Haltemutter beim Aufschrauben auf das Außengewinde mit der Führungshülse verklemmen kann.

Vorzugsweise ist die Führungshülse aus einem Aluminiummaterial hergestellt. Die Führungshülse kann dadurch aus einem kostengünstigen Material hergestellt sein. Zudem ist die Führungshülse im Vergleich zu einem Stahlmaterial weicher, so dass sich beispielsweise die Haltemutter in das Material der Führungshülse einschneiden kann, um eine besonders stabile Verbindung zu erzeugen.

Besonders bevorzugt sind das Außengewinde der Führungshülse und/oder ein Innengewinde der Haltemutter im verschraubten Zustand zumindest teilweise plastisch verformt. Durch die plastische Verformung kann eine besonders hohe Haltekraft zwischen der Haltemutter und der Führungshülse erreicht werden, die eine Übertragung von entsprechend hohen Kräften dauerfest ermöglicht. Die Haltemutter kann hierzu mit einem vordefinierten Drehmoment auf die Führungshülse aufgeschraubt werden.

Insbesondere ist die Haltemutter über ein Sicherungselement zur Ausbildung einer Schraubensicherung mit der Führungshülse gesichert, wobei insbesondere das Sicherungselement als eine mit der Haltemutter und der Führungshülse verklebte Klebeschicht ausgestaltet ist. Ein ungewolltes Lockern oder Lösen der Haltemutter von der Führungshülse kann dadurch sicher vermieden werden. Insbesondere kann vorgesehen sein, dass die Klebeschicht nach dem Aushärten bei einem entsprechend hohem an der Haltemutter angelegtem Drehmoment aufbrechen und/oder von der Haltemutter und/oder von der Führungshülse abplatzen kann. Dadurch kann trotz einer dauerfesten Verbindung der Haltemutter mit der Führungshülse über die Lebensdauer des Kupplungsaggregats eine einfache Demontagemöglichkeit gegeben sein.

Vorzugsweise ist das Deckellager zwischen der Haltemutter und dem Kupplungsteil verklemmt. Das Deckellager kann dadurch spielfrei und mit einer gewissen Klemmkraft in axialer Richtung zwischen der Haltemutter und dem Kupplungsteil lagefest positioniert sein. Hierbei können insbesondere das Deckellager direkt oder indirekt an einem Innenring des Deckellagers und das Kupplungsteil direkt oder indirekt an einem Außenring des Deckellagers angreifen. Durch das Deckellager verursachte Klappergeräusche im Betrieb des Kupplungsaggregats können dadurch sicher vermieden werden.

Besonders bevorzugt ist das Deckellager als Wälzlager, insbesondere Rillenkugellager, ausgestaltet. Das Deckellager kann insbesondere als Radiallager ausgestaltet sein, wobei das Deckellager als Wälzlager auch Kräfte in axialer Richtung übertragen kann. Das Deckellager kann dadurch den im Betrieb des Kupplungsaggregats abzutragenden auftretenden Betätigungskräften des Nehmerzylinders ohne besondere konstruktive Maßnahmen standhalten.

Insbesondere ist die Führungshülse einstückig mit dem Nehmerzylinder ausgeführt. Die Führungshülse und der Nehmerzylinder können dadurch aus dem gleichen Material, insbesondere einem kostengünstigen Aluminiummaterial, hergestellt sein. Ferner ist die Bauteileanzahl klein gehalten, wodurch die Montage leichter und kostengünstiger erfolgen kann.

Vorzugsweise weist das Deckellager eine Aussparung zur Aufnahme zumindest eines Teils der Haltemutter auf. Besonders bevorzugt kann die Haltemutter in radialer Richtung betrachtet zu einem Großteil, insbesondere vollständig von dem Deckellager überdeckt sein. Der axiale Bauraumbedarf kann dadurch gering gehalten werden.

Die Erfindung betrifft ferner ein Kupplungsaggregat zum Kuppeln einer Antriebswelle eines Kraftfahrzeugmotors mit mindestens einer Getriebeeingangswelle eines Kraftfahrzeuggetriebes, mit einer Reibungskupplung zum reibschlüssigen Verpressen einer mit der Getriebeeingangswelle drehfest verbindbaren Kupplungsscheibe zwischen einer mit der Antriebswelle koppelbaren Gegenplatte und einer relativ zur Gegenplatte verlagerbaren Anpressplatte, einem insbesondere als Kupplungsdeckel ausgestaltetem mit der Gegenplatte direkt oder indirekt verbundenen Kupplungsteil und einem an dem Kupplungsteil abgestützten Betätigungssystem, das wie vorstehend beschrieben aus- und weitergebildet sein kann, zur Bereitstellung einer in axialer Richtung weisenden Betätigungskraft zum Öffnen und/oder Schließen der Reibungskupplung. Durch die mit der Führungshülse verschraubte Haltemutter können beim Betätigen des Kupplungsaggregats auftretende Betätigungskräfte über das Deckellager an das Kupplungsteil abgetragen werden, ohne den Nehmerzylinder mit einem Getriebegehäuse eines Kraftfahrzeuggetriebes verbinden zu müssen, so dass ein dauerfestes leicht montierbares und kostengünstiges Kupplungsaggregat ermöglicht ist.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
- Fig. 1:: eine schematische Schnittansicht eines Teils eines Kupplungsaggregats und
- Fig. 2:: eine schematische Detailansicht des Kupplungsaggregats aus Fig. 1.

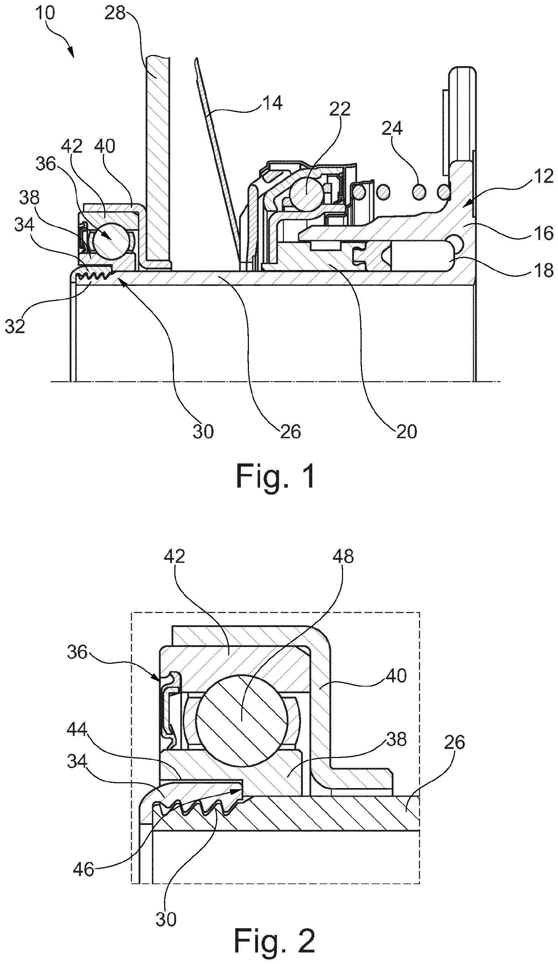

Das in Fig. 1 dargestellte Kupplungsaggregat 10 weist ein Betätigungssystem 12 auf, mit dessen Hilfe eine Betätigungskraft in axialer Richtung bereitgestellt werden kann um ein als tellerfederartige Hebelfeder ausgestaltetes Betätigungselement 14 zu verschwenken. Dadurch kann das Betätigungselement 14 eine Anpressplatte einer Reibungskupplung relativ zu einer mit einer Antriebswelle eines Kraftfahrzeugmotors gekoppelten Gegenplatte verlagert werden, um eine mit einer Getriebeeingangswelle eines Kraftfahrzeuggetriebes drehfest verbundene Kupplungsscheibe reibschlüssig zu verpressen.

Das Betätigungssystem 12 weist einen Nehmerzylinder 16 mit einem ringförmigen Druckraum 18 und einem in dem Druckraum 18 in axialer Richtung geführten Kolben 20 auf. Der Kolben 20 greift über ein als Kugellager ausgestaltetes Betätigungslager 22 an dem Betätigungselement 14 an und kann das Betätigungselement 14 bei einem Ausfahren aus dem Druckraum 18 und/oder bei einem Einfahren in den Druckraum 18 verschwenken. Zwischen dem Nehmerzylinder 16 und dem Betätigungslager 22 ist eine Vorlastfeder 24 vorgesehen, die beispielsweise eine axiale Vorspannung des Betätigungselements 14 im eingefahrenen Zustand des Kolbens 20 zumindest teilweise kompensieren kann.

Das Betätigungssystem 12 weist zusätzlichen eine einstückig mit dem Nehmerzylinder 16 ausgeführte Führungshülse 26 auf, die in axialer Richtung von dem Nehmerzylinder 16 in Richtung der Reibungskupplung absteht und radial innerhalb durch ein als Kupplungsdeckel 28 ausgestaltetes Kupplungsteil des Kupplungsaggregats 10 hindurchgeführt ist. Der Nehmerzylinder 16 und die Führungshülse 26 sind aus einem kostengünstigen Aluminiummaterial hergestellt. In einem von dem Nehmerzylinder 16 wegweisenden Endbereich 30 der Führungshülse 26 ist ein Außengewinde 32 vorgesehen, mit dem eine Haltemutter 34 verschraubt ist. Mit Hilfe der Haltemutter 34 ist zwischen der Haltemutter 34 und dem Kupplungsdeckel 28 ein Deckellager 36, insbesondere spielfrei, positioniert. Hierbei kann die Haltemutter an einem Innenring 38 des Deckellagers 36 angreifen, während der Kupplungsdeckel 28 über einen im Querschnitt treppenförmigen Haltering 40 an einem Außenring 42 des Deckellagers 36 angreift. Der Haltering 40 kann mit dem Außenring 42 und/oder mit dem Kupplungsdeckel 28 verpresst sein.

Wie in Fig. 2 dargestellt kann der Innenring 38 radial innen eine ringförmige Aussparung 44 aufweisen, in welche die Haltemutter 34 eingeschraubt ist. Dadurch ist ein durch den Innenring 38 ausgebildeter Axialanschlag 46, an dem die Haltemutter 34 angreift, entsprechend versetzt. Im dargestellten Ausführungsbeispiel ist der Axialanschlag 46 im Wesentlichen mittig zu einer den Innenring 38 und den Außenring 42 kontaktierenden Kugel 48 des als Rillenkugellager ausgestalteten Deckellagers 36 positioniert.

### Bezugszeichenliste

- 10: Kupplungsaggregat
- 12: Betätigungssystem
- 14: Betätigungselement
- 16: Nehmerzylinder
- 18: Druckraum
- 20: Kolben
- 22: Betätigungslager
- 24: Vorlastfeder
- 26: Führungshülse
- 28: Kupplungsdeckel
- 30: Endbereich
- 32: Außengewinde
- 34: Haltemutter
- 36: Deckellager
- 38: Innenring
- 40: Haltering
- 42: Außenring
- 44: Aussparung
- 46: Axialanschlag
- 48: Kugel

## Patentansprüche

1. Betätigungssystem zum Betätigen eines Kupplungsaggregats (10) zum Kuppeln einer Antriebswelle eines Kraftfahrzeugmotors mit mindestens einer Getriebeeingangswelle eines Kraftfahrzeuggetriebes, mit
einem Nehmerzylinder (16) zum Einleiten einer Betätigungskraft,
einer Führungshülse (26) zum Abstützen des Nehmerzylinders (16) und
einem an einem Kupplungsteil, insbesondere Kupplungsdeckel (28), abgestützten Deckellager (36) zur Lagerung des Kupplungsteils (28) an der Führungshülse (26), wobei das Deckellager (36) auf der Führungshülse (26) aufgesteckt ist,
**dadurch gekennzeichnet, dass** die Führungshülse (26) an einem von dem Nehmerzylinder (16) wegweisendem Endbereich (30) ein Außengewinde (32) aufweist und eine Haltemutter (34) auf dem Außengewinde (32) aufgeschraubt ist, und
wobei das Deckellager (36) zwischen der Haltemutter (34) und dem Kupplungsteil in axialer Richtung verliersicher, insbesondere spielfrei, aufgenommen ist.

2. Betätigungssystem nach Anspruch 1 **dadurch gekennzeichnet, dass** eine Flankengeometrie des Außengewindes (32) und/oder eine Flankengeometrie der Haltemutter (34) für eine selbstverstärkende Verschraubung ausgeformt ist.

3. Betätigungssystem nach Anspruch 1 oder 2 **dadurch gekennzeichnet, dass** die Führungshülse (26) aus einem Aluminiummaterial hergestellt ist.

4. Betätigungssystem nach einem der Ansprüche 1 bis 3 **dadurch gekennzeichnet, dass** das Außengewinde (32) der Führungshülse (26) und/oder ein Innengewinde der Haltemutter (34) im verschraubten Zustand zumindest teilweise plastisch verformt ist.

5. Betätigungssystem nach einem der Ansprüche 1 bis 4 **dadurch gekennzeichnet, dass** die Haltemutter (34) über ein Sicherungselement zur Ausbildung einer Schraubensicherung mit der Führungshülse (26) gesichert ist, wobei insbesondere das Sicherungselement als eine mit der Haltemutter (38) und der Führungshülse (26) verklebte Klebeschicht ausgestaltet ist.

6. Betätigungssystem nach einem der Ansprüche 1 bis 5 **dadurch gekennzeichnet, dass** das Deckellager (36) zwischen der Haltemutter (34) und dem Kupplungsteil verklemmt ist.

7. Betätigungssystem nach einem der Ansprüche 1 bis 6 **dadurch gekennzeichnet, dass** das Deckellager (36) als Wälzlager, insbesondere Rillenkugellager, ausgestaltet ist.

8. Betätigungssystem nach einem der Ansprüche 1 bis 7 **dadurch gekennzeichnet, dass** die Führungshülse (26) einstückig mit dem Nehmerzylinder (16) ausgeführt ist.

9. Betätigungssystem nach einem der Ansprüche 1 bis 8 **dadurch gekennzeichnet, dass** das Deckellager (36) eine Aussparung (44) zur Aufnahme zumindest eines Teils der Haltemutter (38) aufweist.

10. Kupplungsaggregat (10) zum Kuppeln einer Antriebswelle eines Kraftfahrzeugmotors mit mindestens einer Getriebeeingangswelle eines Kraftfahrzeuggetriebes, mit einer Reibungskupplung zum reibschlüssigen Verpressen einer mit der Getriebeeingangswelle drehfest verbindbaren Kupplungsscheibe zwischen einer mit der Antriebswelle koppelbaren Gegenplatte und einer relativ zur Gegenplatte verlagerbaren Anpressplatte, einem insbesondere als Kupplungsdeckel (28) ausgestaltetem mit der Gegenplatte direkt oder indirekt verbundenen Kupplungsteil und einem an dem Kupplungsteil abgestützten Betätigungssystem (12) nach einem der Ansprüche 1 bis 9 zur Bereitstellung einer in axialer Richtung weisenden Betätigungskraft zum Öffnen und/oder Schließen der Reibungskupplung.

## Claims

1. Actuating system for actuating a clutch unit (10) for coupling a drive shaft of a motor vehicle engine to at least one transmission input shaft of a motor vehicle transmission, having
a slave cylinder (16) for introducing an actuating force,
a guide sleeve (26) for supporting the slave cylinder (16), and
a cover bearing (36) supported on a clutch part, in particular a clutch cover (28), and intended for mounting the clutch part (28) on the guide sleeve (26), wherein the cover bearing (36) is plugged on the guide sleeve (26),
**characterized in that** the guide sleeve (26) has an external thread (32) on an end region (30) directed away from the slave cylinder (16), and a retaining nut (34) is screwed on the external thread (32), and wherein the cover bearing (36) is received captively, in particular without play, between the retaining nut (34) and the clutch part in the axial direction.

2. Actuating system according to Claim 1, **characterized in that** a flank geometry of the external thread (32) and/or a flank geometry of the retaining nut (34) are/is configured for a self-reinforcing screw connection.

3. Actuating system according to Claim 1 or 2, **characterized in that** the guide sleeve (26) is produced from an aluminium material.

4. Actuating system according to one of Claims 1 to 3, **characterized in that** the external thread (32) of the guide sleeve (26) and/or an internal thread of the retaining nut (34) are/is at least partially plastically deformed in the screwed state.

5. Actuating system according to one of Claims 1 to 4, **characterized in that** the retaining nut (34) is secured with the guide sleeve (26) via a securing element to form a screw safeguard, wherein in particular the securing element is configured as an adhesive layer which is adhesively bonded to the retaining nut (38) and the guide sleeve (26).

6. Actuating system according to one of Claims 1 to 5, **characterized in that** the cover bearing (36) is clamped between the retaining nut (34) and the clutch part.

7. Actuating system according to one of Claims 1 to 6, **characterized in that** the cover bearing (36) is designed as a rolling bearing, in particular a deep-groove ball bearing.

8. Actuating system according to one of Claims 1 to 7, **characterized in that** the guide sleeve (26) is configured in one piece with the slave cylinder (16).

9. Actuating system according to one of Claims 1 to 8, **characterized in that** the cover bearing (36) has a clearance (44) for receiving at least part of the retaining nut (38).

10. Clutch unit (10) for coupling a drive shaft of a motor vehicle engine to at least one transmission input shaft of a motor vehicle transmission, with a friction clutch for frictionally pressing a clutch disc, which can be connected to the transmission input shaft in a rotationally fixed manner, between a counter-plate, which can be coupled to the drive shaft, and a pressure plate which can be displaced relative to the counter-plate, with a clutch part which is designed in particular as a clutch cover (28) and is directly or indirectly connected to the counter-plate, and with an actuating system (12) according to one of Claims 1 to 9 that is supported on the clutch part and is intended for providing an actuating force, which is directed in the axial direction, for opening and/or closing the friction clutch.

## Revendications

1. Système d'actionnement pour actionner un module d'embrayage (10) afin de coupler un arbre de commande d'un moteur de véhicule automobile à au moins un arbre d'entrée de boîte de vitesses d'une boîte de vitesses de véhicule automobile, avec
un cylindre récepteur (16) pour introduire une force d'actionnement,
une douille de guidage (26) pour supporter le cylindre récepteur (16) et
un palier de couvercle (36), supporté sur une partie d'embrayage, en particulier sur un couvercle d'embrayage (28), pour l'appui de la partie d'embrayage (28) sur la douille de guidage (26), dans lequel le palier de couvercle (36) est emboîté sur la douille de guidage (26),
**caractérisé en ce que** la douille de guidage (26) présente un filet extérieur (32) dans une région d'extrémité (30) orientée à l'opposé du cylindre récepteur (16) et un écrou de retenue (34) est vissé sur le filet extérieur (32), et dans lequel le palier de couvercle (36) est logé de façon imperdable, en particulier sans jeu, en direction axiale entre l'écrou de retenue (34) et la partie d'embrayage.

2. Système d'actionnement selon la revendication 1, **caractérisé en ce qu'**une géométrie des flancs du filet extérieur (32) et/ou une géométrie des flancs de l'écrou de retenue (34) est configurée pour un vissage auto-renforçateur.

3. Système d'actionnement selon une revendication 1 ou 2, **caractérisé en ce que** la douille de guidage (26) est fabriquée en un matériau à base d'aluminium.

4. Système d'actionnement selon l'une quelconque des revendications 1 à 3, **caractérisé en ce que** le filet extérieur (32) de la douille de guidage (26) et/ou un filet intérieur de l'écrou de retenue (34) est au moins partiellement déformé plastiquement à l'état vissé.

5. Système d'actionnement selon l'une quelconque des revendications 1 à 4, **caractérisé en ce que** l'écrou de retenue (34) est bloqué au moyen d'un élément de blocage pour la formation d'un blocage vissé avec la douille de guidage (26), dans lequel l'élément de blocage est en particulier réalisé sous la forme d'une couche de colle collée avec l'écrou de retenue (38) et la douille de guidage (26).

6. Système d'actionnement selon l'une quelconque des revendications 1 à 5, **caractérisé en ce que** le palier de couvercle (36) est serré entre l'écrou de retenue (34) et la partie d'embrayage.

7. Système d'actionnement selon l'une quelconque des revendications 1 à 6, **caractérisé en ce que** le palier de couvercle (36) est formé par un palier à roulement, en particulier par un roulement à billes rainuré.

8. Système d'actionnement selon l'une quelconque des revendications 1 à 7, **caractérisé en ce que** la douille de guidage (26) est réalisée d'une seule pièce avec le cylindre récepteur (16).

9. Système d'actionnement selon l'une quelconque des revendications 1 à 8, **caractérisé en ce que** le palier de couvercle (36) présente une découpe (44) destinée à recevoir au moins une partie de l'écrou de retenue (38).

10. Module d'embrayage (10) permettant de coupler un arbre de commande d'un moteur de véhicule automobile à au moins un arbre d'entrée de boîte de vitesses d'une boîte de vitesses de véhicule automobile, avec un embrayage à friction pour le pressage par friction d'un disque d'embrayage pouvant être assemblé de façon calée en rotation à l'arbre d'entrée de boîte de vitesses entre une plaque opposée pouvant être couplée à l'arbre de commande et une plaque de pression déplaçable par rapport à la plaque opposée, une partie d'embrayage configurée en particulier comme couvercle d'embrayage (28) et reliée directement ou indirectement à la plaque opposée et un système d'actionnement (12) selon l'une quelconque des revendications 1 à 9 supporté sur la partie d'embrayage pour la fourniture d'une force d'actionnement orientée en direction axiale pour ouvrir et/ou fermer l'embrayage à friction.
